# EUROPEAN PATENT SPECIFICATION

(11) **EP 2 265 433 B1**
(45) Date of publication and mention of the grant of the patent: **19.12.2012**
(21) Application number: 09733822.2
(22) Date of filing: 24.04.2009
(51) Int. Cl.: B29D 30/24, B29D 30/26

(54) **DEVICE FOR BUILDING A TYRE**
VORRICHTUNG ZUR HERSTELLUNG EINES REIFENS
DISPOSITIF POUR CONFECTIONNER UN PNEU

(30) Priority: 24.04.2008 NL 2001515; 24.04.2008 US 125395 P
(43) Date of publication of application: 29.12.2010
(73) Proprietor: VMI Holland B.V., 8161 RK Epe (NL)
(72) Inventor: DE GRAAF, Martin, NL-8166 KZ Emst (NL)
(74) Representative: Peters, Sebastian Martinus
(86) International application number: PCT/NL2009/050223
(87) International publication number: WO 2009/131456

(56) References cited:
- US-A- 2 715 933
- US-A- 3 053 308
- US-A- 3 493 454
- US-A- 4 010 058
- US-A- 4 226 656

## Description

### BACKGROUND OF THE INVENTION

The present invention relates to a device for building a tyre, which device comprises a drive unit, a drum shaft drivable by the drive unit, a building drum arranged around the drum shaft which building drum has a first and a second building drum half, a pressure medium unit for pressurising a pressure medium, and a pressure medium coupling rotatable about the drum shaft, which pressure medium coupling is provided with pressure medium connections, wherein each building drum half is provided with a number of pressure medium connections and with pressure medium operated elements, wherein the pressure medium connections of the first building drum half are connected to the pressure medium connections of the rotatable pressure medium coupling by means of a first tube set, wherein in the drum shaft pressure medium ducts have been arranged which at one side are connected to the rotatable pressure medium coupling and at the other side are connected to the pressure medium connections of the second building drum half by means of a second tube set.

Such a device is for instance known from WO 2005/118270 A2. In such a device it is necessary for building tyres of different dimensions and for maintenance that building drum halves are removed from the drum shaft and have to be placed thereon. For that purpose first all tubes of the tube sets that may contain up to five or even more tubes, have to be disconnected therefrom at both ends, after which the drum halves can be slid from the drum shaft. After that other drum halves or the same drum halves that have been serviced, are slid back onto the drum shaft again and the tube sets are connected again. In order to rule out mounting in the wrong way as much as possible, the tubes of the tube sets are designed as different from each other as possible. Despite these measures there still is the risk that the tubes are connected in the wrong way, wherein disconnecting and again connecting the tubes is a laborious and time-consuming action.

Document US 4226656 - A discloses a tire building drum, on which a carcass is expanded outwardly from its centre prior to application of bead rings at its edges. A green carcass upon the building drum is first expanded in its central region and then in both directions outwardly from that central region to smooth and tension it. Bead rings are applied to the so expanded carcass and the carcass fully expanded whilst the bead rings are moved axially towards one another, expansion of the carcass being stopped by a breaker belt or a specially located stop ring. Finally the edges of the carcass are folded around the beads by successive action of an internal folding bladder, a first outer folding bladder, and a second outer folding bladder.

Document US 4010058 - A discloses a tire building drum having a shaft carrying a pair of drum end assemblies each having a number of segments arranged about the shaft, which cooperate to form shoulders of the drum, and a number of bead positioning fingers arranged about the shaft adjacent and axially outwardly of the shoulders to position the tyre bead.

A right hard-left hand screw is arranged coaxially of the shaft and carries a nut at each end, on oppositely handed threads of the screw, each nut being connected to the segments and fingers of the drum to move them radially as the screw is rotated.

### SUMMARY OF THE INVENTION

It is among others an object of the present invention to provide a device for building a tyre with which wrongly connecting tubes is ruled out, and wherein disconnecting and again connecting tubes can take place more quickly.

To that end according to the invention a device for building a tyre of the type described in the preamble is defined in claim 1, wherein each tube set is connected to a building drum half mounting ring, which building drum half mounting ring is connectable to the pressure medium connections of the building drum half in question, so that the pressure medium connections of the building drum half in question are connected to the tube set by means of the building drum half mounting ring in question. In particular the number of pressure medium connections of a building drum half have been placed substantially in or near a distal end of said building drum half, wherein each tube set is connected to a building drum half mounting ring, which building drum half mounting ring is connectable, preferably fixedly or rotation-fixedly connectable to the respective distal end for forming a fluid connection between tubes of the tube set and the pressure medium connections of the building drum half in question. For disconnecting (connecting, respectively) the tube set from/to the building drum half it will as a result only be necessary to disconnect (connect, respectively) the mounting ring in question and not every single tube needs to be individually disconnected (connected, respectively). As a result considerable time is saved, wherein the risk of making a wrong connection to the pressure medium connections of the building drum half is also strongly reduced.

In an alternative embodiment the invention provides a device for building a tyre of the type described in the preamble as defined in claim 7, wherein the pressure medium connections of the rotatable pressure medium coupling have been placed substantially in or near an end of the rotatable pressure medium coupling, which end faces the first building drum half and wherein at least the first tube set is connected to a coupling mounting ring, which coupling mounting ring is connectable, particularly fixedly or rotation fixedly connectable to the end of the rotatable pressure medium coupling for forming a fluid connection between tubes of the tube set and the pressure medium connections of the rotatable pressure medium coupling.

In a further alternative embodiment the invention provides a device for building a tyre of the type described in the preamble as defined in claim 9, wherein the pressure medium connections of the rotatable pressure medium coupling have been placed substantially in or near an end of the rotatable pressure medium coupling, which end faces the first building drum half, and in that the pressure medium connections of the first building drum half have been placed substantially in or near a distal end of the first building drum half, wherein at least the first tube set at a first end is connected to a building drum half mounting ring and at a second end is connected to a coupling mounting ring, wherein the building drum half mounting ring is connectable, particularly fixedly or rotation-fixedly connectable to the distal end for forming a fluid connection between tubes of the first tube set and the pressure medium connections of the first building drum half, and wherein the coupling mounting ring is connectable, particularly fixedly or rotation-fixedly connectable to the end of the rotatable pressure medium coupling for forming a fluid connection between tubes of the tube set and the pressure medium connections of the rotatable pressure medium coupling.

Preferred embodiments of the invention are defined in the dependent claims. In one embodiment of a device according to the invention the first tube set is connected to a coupling mounting ring, which coupling mounting ring is connectable to the pressure medium connections of the pressure medium coupling, so that the pressure medium connections of the pressure medium coupling are connected to the first tube set by means of the coupling mounting ring. For disconnecting (connecting, respectively) the tube set from/to the pressure medium coupling it will as a result only be necessary to disconnect (connect, respectively) the coupling mounting ring and not every single tube needs to be individually disconnected (connected, respectively). In that way considerable time is saved, wherein the risk of making a wrong connection to the pressure medium connections of the pressure medium coupling is also strongly reduced.

In a further embodiment of a device according to the invention the second tube set is connected to a drum shaft mounting ring, which drum shaft mounting ring is connectable to the pressure medium ducts in the drum shaft, so that the pressure medium ducts are connected to the second tube set by means of the drum shaft mounting ring. For disconnecting (connecting, respectively) the tube set from/to the pressure medium ducts it will as a result only be necessary to disconnect (connect, respectively) the drum shaft mounting ring, and not every single tube needs to be individually disconnected (connected, respectively). As a result considerable time is saved, wherein the risk of making a wrong connection to the pressure medium ducts is also strongly reduced.

The risk of wrongly connecting tubes is reduced to nil when a amounting ring and the related part are designed such that they can be connected to each other in one position only. Such embodiments of a connection between parts that can be realised in one position only are known per se. Consider for instance tenon and mortise joints, bayonet couplings and the like.

In an advantageous embodiment of a device according to the invention the coupling mounting ring is fixedly connected to the drum shaft. In that way the coupling mounting ring does not need to be disconnected during replacement of the first building drum half.

### SHORT DESCRIPTION OF THE DRAWINGS

The invention will be elucidated on the basis of a number of exemplary embodiments shown in the attached drawings, in which:
Figure 1 shows a schematic side view of an inventive device for building a tyre;
Figures 2A and 2B show a schematic side view of a tube of which one end has been connected to a building drum mounting ring;
Figures 3A, 3B and 3C show a schematic side view, of a part of a building drum half and a tube set in disconnected and connected condition;
Figure 4 shows a schematic side view of an alternative device for building a tyre according to the invention;
Figure 5 shows a schematic side view of a tube of which an end has been connected to a coupling mounting ring; and
Figure 6 shows a schematic side view of a tube of which the ends have been connected to a building drum mounting ring and a coupling mounting ring, respectively.

### DETAILED DESCRIPTION OF THE DRAWINGS

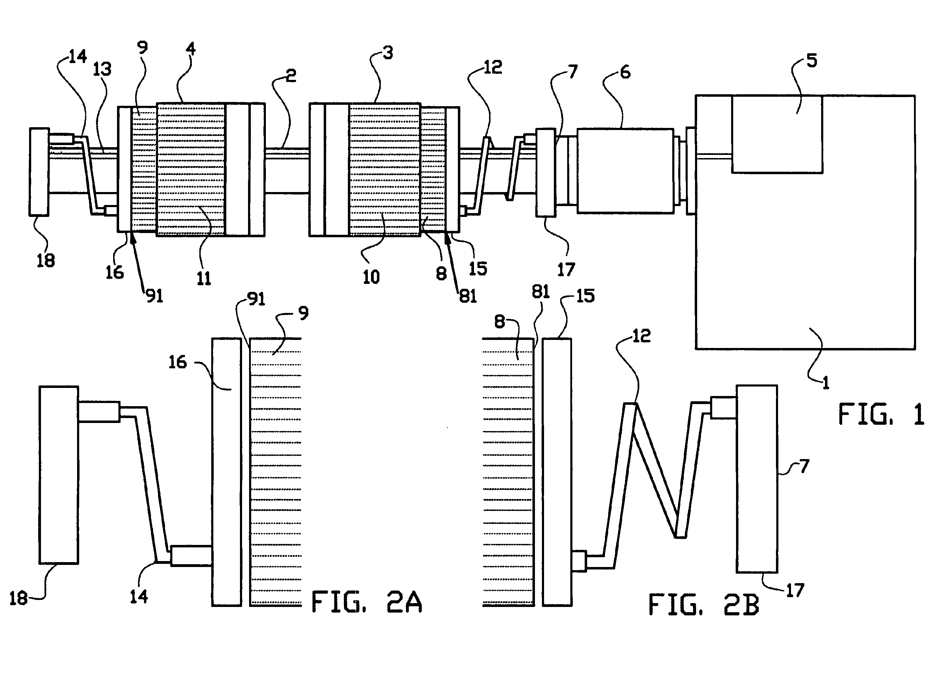

In figure 1 a schematic side view is shown of an inventive device for building a tyre. The device shown comprises a drive unit 1 driving a drum shaft 2. A tyre building drum is arranged on the drum shaft 2, the tyre building drum comprising a first building drum half 3 and a second building drum half 4. The device further comprises a schematically shown pressure medium unit 5 for pressurising a pressure medium, such as for instance air.

Via a pressure medium coupling 6 that is provided with pressure medium connections 7 and is rotatable about the drum shaft 2, the pressure medium unit 5 is connectable to pressure medium connections 8, 9 provided on each building drum half 3, 4. It is noted that said pressure medium connections 8, 9 are schematically shown in the figures.

Each building drum half 3, 4 further contains pressure medium operated elements 10, 11 that are not further indicated. Such elements 10, 11 may for instance be turn-up arms as described in WO 2005/118270 A2.

The pressure medium connections 8 of the first building drum half 3 are connected to the pressure medium connections 7 of the rotatable pressure medium coupling 6 by means of a first tube set 12. In the embodiment shown for the sake of clarity of the drawing only one tube is shown, but in actual practice each tube set contains up to five or even more tubes.

In the drum shaft 2 pressure medium ducts 13 have been arranged that at one side are connected to she rotatable pressure medium coupling 6 and at the other side are connected to the pressure medium connections 9 of the second building drum half 4 by means of a second tube set 14. Although only one duct 13 is shown, it will be clear that in actual practice there are several ducts.

Each tube set 12;14 is connected to a building drum half mounting ring 15;16. Said mounting ring 1 5; 1 6 is connectable, particularly fixedly or rotation-fixedly connectable to a distal end 81;91 of the building drum half 3;4, so that the pressure medium connections 8;9 of the building drum half 3;4 in question are connected to the tube set 12;14 by means of the building drum half mounting ring 15;16 in question.

As shown in figure 1 the first tube set 12 is connected to a coupling mounting ring 17, that is connected to the pressure medium connections 7 of the pressure medium coupling 6, so that the pressure medium connections 7 of the pressure medium coupling 6 are connected to the first tube set 12 by means of the coupling mounting ring 17.

Figure 1 furthermore shows that the second tube set 14 is connected to a drum shaft mounting ring 18 that is connected to the pressure medium ducts 13 in the drum shaft 2, so that the pressure medium ducts 13 are connected to the second tube set 14 by means of the drum shaft mounting ring 18.

In figure 2A a schematic side view of the second tube set 14 is shown, of which the ends have each been connected to the mounting ring 16, 18 in question. In figure 2B a schematic side view is shown of the first tube set 12 of which the ends have each been connected to the mounting ring 15, 17 in question. The assembly of tube set 14; 12 and mounting rings 16, 18; 15, 17 can be integrally formed. As shown in figure 2A and 2B when detaching the drum half mounting rings 15;16, the first and second tube set 12;14 can remain fixedly connected to the coupling mounting ring 17, or the drum shaft mounting ring 18, respectively. On the one hand the drum half mounting ring 15, the first tube set 12 and the coupling mounting ring 17 can remain fixedly connected to the pressure medium connections 7 of the rotatable pressure medium coupling 6. When detaching the first building drum half 3, said elements can be left as one unity on the drum shaft 2 in order to be coupled to a new first building drum half. On the other hand the drum half mounting ring 16, the second tube set 14 and the drum shaft mounting ring 18 can be removed from or arranged on the drum shaft 2 as one unity.

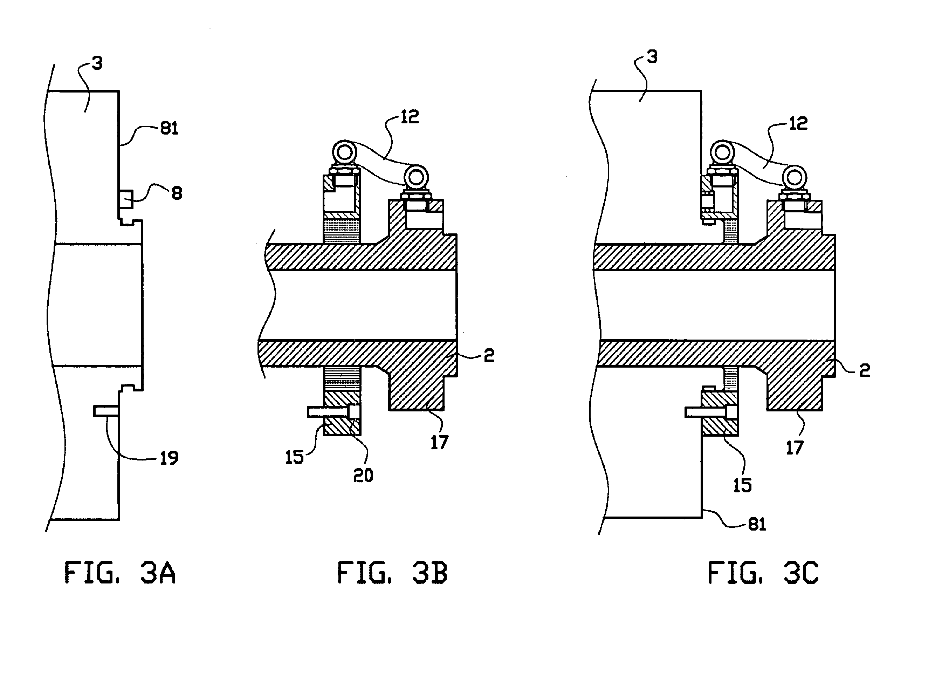

In figures 3A, 3B and 3C a schematic side view is shown of a part of the first building drum half 3 and the first tube set 14 in disconnected condition (figures 3A and 3B) and the connected condition (figure 3C). In that case the coupling mounting ring 17 is fixedly connected to the drum shaft 2, in other words is integrated therewith. In these figures one possible embodiment is shown as a result of which the drum half mounting ring 15 can be connected to the building drum half 3 in one position only. For that purpose the building drum half 3 is provided with a hole 19, and the drum half mounting ring 15 is provided with a pin 20 fitting in the hole 19. In that way the mounting ring 15 and the drum half 3 can be connected to each other in one position only. The drum half mounting ring 15 thus provides a quick-coupling for in one go coupling all tubes of the first tube set 14 to the building drum half 3. It will be clear to an expert that other embodiments of the mounting ring and the related part are possible wherein a mutual connection is possible in one position only. Consider for instance a bayonet connection.

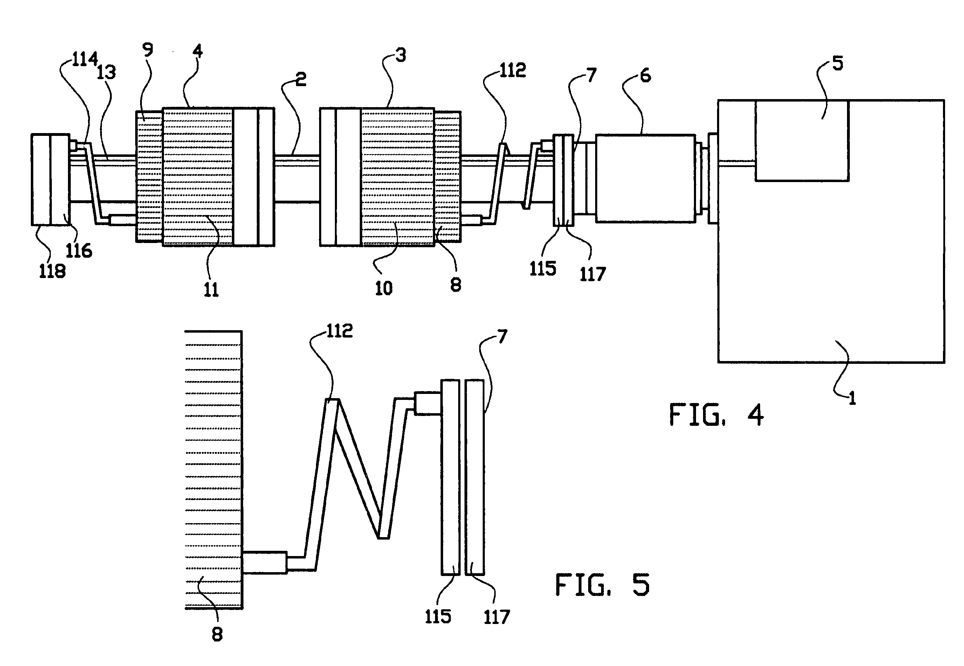

In figure 4 a schematic side view is shown, wherein the first and second tube set 112;114 at the one side are connected to the respective building drum halves 3;4 and at the other side are connected to a first part 115;116 of the mounting ring, wherein the first part 115;116 is detachably connectable to a second part 117;118.

In figure 4 it is shown that the first tube set 112 is connected to the first part 115 of a coupling mounting ring that is detachably connected to the second part 117 of the coupling mounting ring, wherein the second part 117 is connected to the pressure medium connections 7 of the pressure medium coupling 6, so that the pressure medium connections 7 of the pressure medium coupling 6 are connected to the first tube set 112 by means of the coupling mounting ring 115, 117.

It is furthermore shown in figure 4 that the second tube set 114 is connected to the first part 116 of a drum shaft mounting ring that is detachably connected to the second part 118 of the drum shaft mounting ring, wherein the second part 118 is connected to the pressure medium ducts 13 in the drum shaft 2, so that the pressure medium ducts 13 are connected to the second tube set 114 by means of the drum shaft mounting ring 116, 118.

In the exemplary embodiment of figure 4, the coupling mounting ring 115, 117 thus provides a quick-coupling for in one go coupling all tubes of the first tube set 112 to the pressure medium connections 7, and the drum shaft mounting ring 116, 118 thus provides a quick-coupling for in one go coupling all tubes of the second tube set 114 to the pressure medium ducts 13 in the drum shaft 2. As shown in figure 5, when detaching the coupling mounting ring 115, 117, the first tube set 112 with the first part 115 of the coupling mounting ring can remain fixedly connected to the pressure medium connections 8 of the first building drum half, wherein said elements can be removed from or arranged on the drum shaft 2 as one unity.

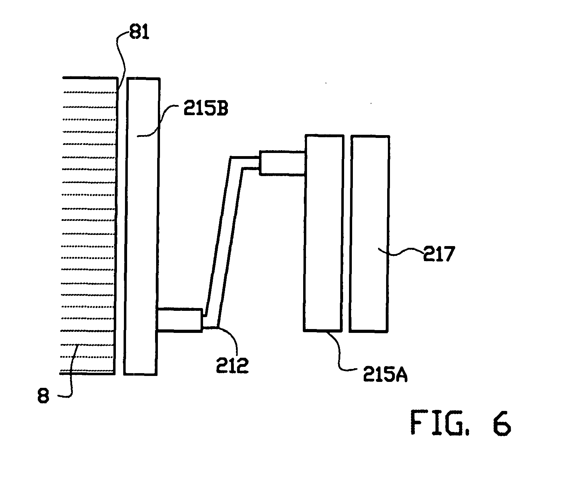

In figure 6 a further exemplary embodiment is schematically shown, wherein the first tube set 212 is provided on either side with a mounting ring 215A, 215B which provide a quick-coupling for in one go coupling all tubes of the first tube set 212 to at the one side the pressure medium connections 8 of the first building drum half and at the other side the pressure medium connections of the coupling mounting ring 217. In this embodiment the tube set 212 and the mounting rings 215A, 2158 are integrally formed.

The above description is included to illustrate the operation of preferred embodiments of the invention and not to limit the scope of the invention. Starting from the above explanation many variations that fall within the scope of the present invention, particularly as defined in the attached claims, will be evident to an expert.

Summarising the invention thus provides a device for building a tyre having a drive unit driving a drum shaft. Around the drum shaft a building drum having a first and a second building drum half is arranged. A pressure medium coupling rotatable about the drum shaft is provided with pressure medium connections. Each building drum half is provided with a number pressure medium connections. The pressure medium connections of the first building drum half are connected to the pressure medium connections of the rotatable pressure medium coupling by means of a first tube set, wherein in the drum shaft pressure medium ducts have been arranged which at one side are connected to the rotatable pressure medium coupling and at the other side are connected to the pressure medium connections of the second building drum half by means of a second tube set. Each tube set is connected to a building drum half mounting ring, which building drum half mounting ring is connectable, to the pressure medium connections of the building drum half in question, so that the pressure medium connections of the building drum half in question are connected to the tube set by means of the building drum half mounting ring in question.

## Claims

1. Device for building a tyre, which device comprises:
a drive unit (1),
a drum shaft (2) drivable by the drive unit (1),
a building drum arranged around the drum shaft (2) which building drum has a first building drum half (3) and a second building drum half (4),
a pressure medium unit (5) for pressurising a pressure medium, and
a pressure medium coupling (6) rotatable about the drum shaft (2), which pressure medium coupling is provided with pressure medium connections (7),
wherein each building drum half (3, 4) is provided with a number of pressure medium connections (8, 9) and with pressure medium operated elements (10, 11), wherein the pressure medium connections (8) of the first building drum half (3) are connected to the pressure medium connections (7) of the rotatable pressure medium coupling (6) by means of a first tube set (12), wherein in the drum shaft (2) pressure medium ducts (13) have been arranged which at one side are connected to the rotatable pressure medium coupling (6) and at the other side are connected to the pressure medium connections (9) of the second building drum half (4) by means of a second tube set (14),
**characterised in that** the number of pressure medium connections (8,9) have been placed substantially in or near a distal end (81,91) of the respective building drum halves (3,4) and wherein each tube set (12, 14) is connected to a building drum half mounting ring (15, 16), which building drum half mounting ring (15, 16) is rotation-fixedly connectable to the respective distal end (81,91) for forming a fluid connection between tubes of the tube set (12,14) and the pressure medium connections (8, 9) of the building drum half (3, 4) in question.

2. Device according to claim 1, **characterised in that** the first tube set (12) is connected to a coupling mounting ring (17), which coupling mounting ring (17) is connectable to the pressure medium connections (7) of the pressure medium coupling (6), so that the pressure medium connections (7) of the pressure medium coupling (6) are connected to the first tube set (12) by means of the coupling mounting ring (17).

3. Device according to claim 2, wherein the coupling mounting ring (17) is fixedly connected to the drum shaft (2) or integrally formed with the drum shaft (2).

4. Device according to claim 1, 2 or 3, **characterised in that** the second tube set (14) is connected to a drum shaft mounting ring (18), which drum shaft mounting ring (18) is connectable to the pressure medium ducts (13) in the drum shaft (2), so that the pressure medium ducts (13) are connected to the second tube set (14) by means of the drum shaft mounting ring (18).

5. Device according to claim 4, wherein the drum shaft mounting ring (18) is detachably connected to the drum shaft (2).

6. Device according to any one of the preceding claims, **characterised in that** the building drum half mounting ring (15, 16) and the related distal end (81,91) of the building drum half (3,4) are designed such that they can be connected to each other in one position only.

7. Device for building a tyre, which device comprises:
a drive unit (1),
a drum shaft (2) drivable by the drive unit (1),
a building drum arranged around the drum shaft (2) which building drum has a first building drum half (3) and a second building drum half (4),
a pressure medium unit (5) for pressurising a pressure medium, and
a pressure medium coupling (6) rotatable about the drum shaft (2), which pressure medium coupling is provided with pressure medium connections (7),
wherein each building drum half (3, 4) is provided with a number of pressure medium connections (8, 9) and with pressure medium operated elements (10, 11), wherein the pressure medium connections (8) of the first building drum half (3) are connected to the pressure medium connections (7) of the rotatable pressure medium coupling (6) by means of a first tube set (12), wherein in the drum shaft (2) pressure medium ducts (13) have been arranged which at one side are connected to the rotatable pressure medium coupling (6) and at the other side are connected to the pressure medium connections (9) of the second building drum half (4) by means of a second tube set (14),
**characterised in that** the pressure medium connections (7) of the rotatable pressure medium coupling (6) have been placed substantially in or near an end (117) of the rotatable pressure medium coupling (6), which end faces the first building drum half (3) and wherein at least the first tube set (12) is connected to a coupling mounting ring (115), which coupling mounting ring (115) is rotation-fixedly connectable to the end (117) of the rotatable pressure medium coupling (6) for forming a fluid connection between tubes of the tube set (12) and the pressure medium connections (7) of the rotatable pressure medium coupling (6).

8. Device according to claim 7, **characterised in that** the coupling mounting ring (115) and the end (117) of the rotatable pressure medium coupling (6) are designed such that they can be connected to each other in one position only.

9. Device for building a tyre, which device comprises:
a drive unit (1),
a drum shaft (2) drivable by the drive unit (1),
a building drum arranged around the drum shaft (2) which building drum has a first building drum half (3) and a second building drum half (4),
a pressure medium unit (5) for pressurising a pressure medium, and
a pressure medium coupling (6) rotatable about the drum shaft (2), which pressure medium coupling is provided with pressure medium connections (7),
wherein each building drum half (3, 4) is provided with a number of pressure medium connections (8, 9) and with pressure medium operated elements (10, 11), wherein the pressure medium connections (8) of the first building drum half (3) are connected to the pressure medium connections (7) of the rotatable pressure medium coupling (6) by means of a first tube set (12), wherein in the drum shaft (2) pressure medium ducts (13) have been arranged which at one side are connected to the rotatable pressure medium coupling (6) and at the other side are connected to the pressure medium connections (9) of the second building drum half (4) by means of a second tube set (14),
**characterised in that** the pressure medium connections (7) of the rotatable pressure medium coupling (6) have been placed substantially in or near an end (71) of the rotatable pressure medium coupling (6), which end faces the first building drum half (3), and **in that** the pressure medium connections (8) of the first building drum half (3) have been placed substantially in or near a distal end (81) of the first building drum half (3), wherein at least the first tube set (212) at a first end is connected to a building drum half mounting ring (215A) and at a second end is connected to a coupling mounting ring (215B), wherein the building drum half mounting ring (215A) is rotation-fixedly connectable to the distal end (81) for forming a fluid connection between tubes of the first tube set (212) and the pressure medium connections (8) of the first building drum half (3), and wherein the coupling mounting ring (215B) is rotation-fixedly connectable to the end (71) of the rotatable pressure medium coupling (6) for forming a fluid connection between tubes of the tube set (212) and the pressure medium connections (7) of the rotatable pressure medium coupling (6).

10. Device according to claim 9, **characterised in that** the building drum half mounting ring (215A) and the distal end (81) of the first building drum half (3) are designed such that they can be connected to each other in one position only and/or wherein the coupling mounting ring (215B) and the end (71) of the rotatable pressure medium coupling (6) are designed such that they can be connected to each other in one position only.

## Patentansprüche

1. Vorrichtung zum Herstellen eines Reifens, wobei die Vorrichtung umfasst:
eine Antriebseinheit (1),
eine von der Antriebseinheit (1) antreibbare Trommelwelle (2),
eine um die Trommelwelle (2) angeordnete Bautrommel, wobei die Bautrommel eine erste Bautrommelhälfte (3) und eine zweite Bautrommelhälfte (4) aufweist,
eine Druckmediumseinheit (5) zum unter Druck setzen eines Druckmediums, und
eine um die Trommelwelle (2) drehbare Druckmediumskopplung (6), wobei die Druckmediumskopplung mit Druckmediumsverbindungen (7) versehen ist,
wobei jede Bautrommelhälfte (3, 4) mit einer Anzahl von Druckmediumsverbindungen (8, 9) und mit von Druckmedium betriebenen Elemente (10, 11) versehen ist, wobei die Druckmediumsverbindungen (8) der ersten Bautrommelhälfte (3) mit den Druckmediumsverbindungen (7) der drehbaren Druckmediumskopplung (6) mittels eines ersten Rohrsatzes (12) verbunden sind, wobei in der Trommelwelle (2) Druckmediumskanäle (13) angeordnet worden sind, welche an einer Seite mit der drehbaren Druckmediumskopplung (6) verbunden sind und an der anderen Seite mit den Druckmediumsverbindungen (9) der zweiten Bautrommelhälfte (4) mittels eines zweiten Rohrsatzes (14) verbunden sind,
**dadurch gekennzeichnet, dass** die Anzahl von Druckmediumsverbindungen (8, 9) im Wesentlichen in oder nahe bei einem entfernten Ende (81, 91) der jeweiligen Bautrommelhälfte (3, 4) angeordnet worden sind und wobei jeder Rohrsatz (12, 14) mit einem Bautrommelhälfte-Anbringungsring (15, 16) verbunden ist, wobei der Bautrommelhälfte-Anbringungsring (15, 16) drehfest mit dem jeweiligen entfernten Ende (81, 91) zum Bilden einer Fluidverbindung zwischen Rohren des Rohrsatzes (12, 14) und den Druckmediumsverbindungen (8, 9) der betreffenden Bautrommelhälfte (3, 4) verbindbar ist.

2. Vorrichtung nach Anspruch 1, **dadurch gekennzeichnet, dass** der erste Rohrsatz (12) mit einem Kopplungsanbringungsring (17) verbunden ist, wobei der Kopplungsanbringungsring (17) mit den Druckmediumsverbindungen (7) der Druckmediumskopplung (6) verbindbar ist, so dass die Druckmediumsverbindungen (7) der Druckmediumskopplung (6) mit dem ersten Rohrsatz (12) mittels des Kopplungsanbringungsrings (17) verbunden sind.

3. Vorrichtung nach Anspruch 2, wobei der Kopplungsanbringungsring (17) fest mit der Trommelwelle (2) verbunden ist oder integral mit der Trommelwelle (2) gebildet ist.

4. Vorrichtung nach Anspruch 1, 2 oder 3, **dadurch gekennzeichnet, dass** der zweite Rohrsatz (14) mit einem Trommelwellen-Anbringungsring (18) verbunden ist, wobei der Trommelwellen-Anbringungsring (18) mit den Druckmediumskanälen (13) in der Trommelwelle (2) verbindbar ist, so dass die Druckmediumskanäle (13) mit dem zweiten Rohrsatz (14) mittels des Trommelwellen-Anbringungsrings (18) verbunden sind.

5. Vorrichtung nach Anspruch 4, wobei der Trommelwellen-Anbringungsring (18) lösbar mit der Trommelwelle (2) verbunden ist.

6. Vorrichtung nach einem der vorhergehenden Ansprüche, **dadurch gekennzeichnet, dass** der Bautrommelhälfte-Anbringungsring (15, 16) und das zugehörige entfernte Ende (81, 91) der Bautrommelhälfte (3, 4) derart ausgelegt sind, dass sie in nur einer Position miteinander verbunden werden können.

7. Vorrichtung zum Herstellen eines Reifens, wobei die Vorrichtung umfasst:
eine Antriebseinheit (1),
eine von der Antriebseinheit (1) antreibbare Trommelwelle (2),
eine um die Trommelwelle (2) angeordnete Bautrommel, wobei die Bautrommel eine erste Bautrommelhälfte (3) und eine zweite Bautrommelhälfte (4) aufweist,
eine Druckmediumseinheit (5) zum unter Druck setzen eines Druckmediums, und
eine um die Trommelwelle (2) drehbare Druckmediumskopplung (6), wobei die Druckmediumskopplung mit Druckmediumsverbindungen (7) versehen ist,
wobei jede Bautrommelhälfte (3, 4) mit einer Anzahl von Druckmediumsverbindungen (8, 9) und mit von Druckmedium betriebenen Elemente (10, 11) versehen ist, wobei die Druckmediumsverbindungen (8) der ersten Bautrommelhälfte (3) mit den Druckmediumsverbindungen (7) der drehbaren Druckmediumskopplung (6) mittels eines ersten Rohrsatzes (12) verbunden sind, wobei in der Trommelwelle (2) Druckmediumskanäle (13) angeordnet worden sind, welche an einer Seite mit der drehbaren Druckmediumskopplung (6) verbunden sind und an der anderen Seite mit den Druckmediumsverbindungen (9) der zweiten Bautrommelhälfte (4) mittels eines zweiten Rohrsatzes (14) verbunden sind,
**dadurch gekennzeichnet, dass** die Druckmediumsverbindungen (7) der drehbaren Druckmediumskopplung (6) im Wesentlichen in oder nahe bei einem Ende (117) der drehbaren Druckmediumskopplung (6) angeordnet worden sind, wobei das Ende in Richtung der ersten Bautrommelhälfte (3) zeigt und wobei wenigstens der erste Rohrsatz (12) mit einem Kopplungsanbringungsring (115) verbunden ist, wobei der Kopplungsanbringungsring (115) drehfest mit dem Ende (117) der drehbaren Druckmediumskopplung (6) zum Bilden einer Fluidverbindung zwischen Rohren des Rohrsatzes (12) und den Druckmediumsverbindungen (7) der drehbaren Druckmediumskopplung (6) verbindbar ist.

8. Vorrichtung nach Anspruch 7, **dadurch gekennzeichnet, dass** der Kopplungsanbringungsring (115) und das Ende (117) der drehbaren Druckmediumskopplung (6) derart ausgelegt sind, dass sie in nur einer Position miteinander verbunden werden können.

9. Vorrichtung zum Herstellen eines Reifens, wobei die Vorrichtung umfasst:
eine Antriebseinheit (1),
eine von der Antriebseinheit (1) antreibbare Trommelwelle (2),
eine um die Trommelwelle (2) angeordnete Bautrommel, wobei die Bautrommel eine erste Bautrommelhälfte (3) und eine zweite Bautrommelhälfte (4) aufweist,
eine Druckmediumseinheit (5) zum unter Druck setzen eines Druckmediums, und
eine um die Trommelwelle (2) drehbare Druckmediumskopplung (6), wobei die Druckmediumskopplung mit Druckmediumsverbindungen (7) versehen ist,
wobei jede Bautrommelhälfte (3, 4) mit einer Anzahl von Druckmediumsverbindungen (8, 9) und mit von Druckmedium betriebenen Elemente (10, 11) versehen ist, wobei die Druckmediumsverbindungen (8) der ersten Bautrommelhälfte (3) mit den Druckmediumsverbindungen (7) der drehbaren Druckmediumskopplung (6) mittels eines ersten Rohrsatzes (12) verbunden sind, wobei in der Trommelwelle (2) Druckmediumskanäle (13) angeordnet worden sind, welche an einer Seite mit der drehbaren Druckmediumskopplung (6) verbunden sind und an der anderen Seite mit den Druckmediumsverbindungen (9) der zweiten Bautrommelhälfte (4) mittels eines zweiten Rohrsatzes (14) verbunden sind,
**dadurch gekennzeichnet, dass** die Druckmediumsverbindungen (7) der drehbaren Druckmediumskopplung (6) im Wesentlichen in oder nahe bei einem Ende (71) der drehbaren Druckmediumskopplung (6) angeordnet worden sind, wobei das Ende in Richtung der ersten Bautrommelhälfte (3) zeigt, und dass die Druckmediumsverbindungen (8) der ersten Bautrommelhälfte (3) im Wesentlichen in oder nahe bei einem entfernten Ende (81) der ersten Bautrommelhälfte (3) angeordnet worden sind, wobei wenigstens der erste Rohrsatz (212) an einem ersten Ende mit einem Bautrommelhälfte-Anbringungsring (215A) verbunden ist und an einem zweiten Ende mit einem Kopplungsanbringungsring (215B) verbunden ist, wobei der Bautrommelhälfte-Anbringungsring (215A) drehfest mit dem entfernten Ende (81) zum Bilden einer Fluidverbindung zwischen Rohren des ersten Rohrsatzes (212) und den Druckmediumsverbindungen (8) der ersten Bautrommelhälfte (3) verbindbar ist, und wobei der Kopplungsanbringungsring (215B) drehfest mit dem Ende (71) der drehbaren Druckmediumskopplung (6) zum Bilden einer Fluidverbindung zwischen Rohren des Rohrsatzes (212) und den Druckmediumsverbindungen (7) der drehbaren Druckmediumskopplung (6) verbindbar ist.

10. Vorrichtung nach Anspruch 9, **dadurch gekennzeichnet, dass** der Bautrommelhälfte-Anbringungsring (215A) und das entfernte Ende (81) der ersten Bautrommelhälfte (3) derart ausgelegt sind, dass sie in nur einer Position miteinander verbunden werden können oder/und wobei der Kopplungsanbringungsring (215B) und das Ende (71) der drehbaren Druckmediumskopplung (6) derart ausgelegt sind, dass sie in nur einer Position miteinander verbunden werden können.

## Revendications

1. Dispositif pour confectionner un pneu, le dispositif comprenant :
une unité d'entraînement (1),
un arbre de tambour (2) pouvant être entraîné par l'unité d'entraînement (1),
un tambour de confection agencé autour de l'arbre de tambour (2), le tambour de confection comprenant une première moitié de tambour de confection (3) et une deuxième moitié de tambour de confection (4),
une unité de milieu sous pression (5) pour pressuriser un milieu sous pression, et
un couplage de milieu sous pression (6) rotatif autour de l'arbre de tambour (2), le couplage de milieu sous pression étant muni de connexions de milieu sous pression (7),
dans lequel chaque moitié de tambour de confection (3, 4) est munie d'un certain nombre de connexions de milieu sous pression (8, 9) et d'éléments actionnés par le milieu sous pression (10, 11), dans lequel les connexions de milieu sous pression (8) de la première moitié de tambour de confection (3) sont connectées aux connexions de milieu sous pression (7) du couplage de milieu sous pression rotatif (6) au moyen d'un premier ensemble de tubes (12), dans lequel dans l'arbre de tambour (2) ont été agencées des conduites de milieu sous pression (13), lesquelles sont connectées d'un côté au couplage de milieu sous pression rotatif (6) et sont connectées de l'autre côté aux connexions de milieu sous pression (9) de la deuxième moitié de tambour de confection (4) au moyen d'un deuxième ensemble de tubes (14),
**caractérisé en ce que** ledit nombre de connexions de milieu sous pression (8, 9) a été placé sensiblement au niveau ou à proximité d'une extrémité distale (81, 91) des moitiés de tambour de confection respectives (3, 4) et dans lequel chaque ensemble de tubes (12, 14) est connecté à une bague de montage de moitié de tambour de confection (15, 16), la bague de montage de moitié de tambour de confection (15, 16) pouvant être connectée de façon fixe en rotation à l'extrémité distale respective (81, 91) pour former une connexion de fluide entre des tubes de l'ensemble de tubes (12, 14) et les connexions de milieu sous pression (8, 9) de la moitié de tambour de confection (3, 4) en question.

2. Dispositif selon la revendication 1, **caractérisé en ce que** le premier ensemble de tubes (12) est connecté à une bague de montage de couplage (17), la bague de montage de couplage (17) pouvant être connectée aux connexions de milieu sous pression (7) du couplage de milieu sous pression (6), de sorte que les connexions de milieu sous pression (7) du couplage de milieu sous pression (6) sont connectées au premier ensemble de tubes (12) au moyen de la bague de montage de couplage (17).

3. Dispositif selon la revendication 2, dans lequel la bague de montage de couplage (17) est connectée de façon fixe à l'arbre de tambour (2) ou formée d'une seule pièce avec l'arbre de tambour (2).

4. Dispositif selon la revendication 1, 2 ou 3, **caractérisé en ce que** le deuxième ensemble de tubes (14) est connecté à une bague de montage d'arbre de tambour (18), la bague de montage d'arbre de tambour (18) pouvant être connectée aux conduites de milieu sous pression (13) dans l'arbre de tambour (2), de sorte que les conduites de milieu sous pression (13) sont connectées au deuxième ensemble de tubes (14) au moyen de la bague de montage d'arbre de tambour (18).

5. Dispositif selon la revendication 4, dans lequel la bague de montage d'arbre de tambour (18) est connectée de façon amovible à l'arbre de tambour (2).

6. Dispositif selon l'une quelconque des revendications précédentes, **caractérisé en ce que** la bague de montage de moitié de tambour de confection (15, 16) et l'extrémité distale (81, 91) associée de la moitié de tambour de confection (3, 4) sont conçues de telle sorte qu'elles ne puissent être connectées entre elles que dans une seule position.

7. Dispositif pour confectionner un pneu, le dispositif comprenant :
une unité d'entraînement (1),
un arbre de tambour (2) pouvant être entraîné par l'unité d'entraînement (1),
un tambour de confection agencé autour de l'arbre de tambour (2), le tambour de confection comprenant une première moitié de tambour de confection (3) et une deuxième moitié de tambour de confection (4),
une unité de milieu sous pression (5) pour pressuriser un milieu sous pression, et
un couplage de milieu sous pression (6) rotatif autour de l'arbre de tambour (2), le couplage de milieu sous pression étant muni de connexions de milieu sous pression (7),
dans lequel chaque moitié de tambour de confection (3, 4) est munie d'un certain nombre connexions de milieu sous pression (8, 9) et d'éléments actionnés par le milieu sous pression (10, 11), dans lequel les connexions de milieu sous pression (8) de la première moitié de tambour de confection (3) sont connectées aux connexions de milieu sous pression (7) du couplage de milieu sous pression rotatif (6) au moyen d'un premier ensemble de tubes (12), dans lequel dans l'arbre de tambour (2) ont été agencées des conduites de milieu sous pression (13), lesquelles sont connectées d'un côté au couplage de milieu sous pression rotatif (6) et sont connectées de l'autre côté aux connexions de milieu sous pression (9) de la deuxième moitié de tambour de confection (4) au moyen d'un deuxième ensemble de tubes (14),
**caractérisé en ce que** les connexions de milieu sous pression (7) du couplage de milieu sous pression rotatif (6) ont été placées sensiblement au niveau ou à proximité d'une extrémité (117) du couplage de milieu sous pression rotatif (6), ladite extrémité faisant face à la première moitié de tambour de confection (3) et dans lequel au moins le premier ensemble de tubes (12) est connecté à une bague de montage de couplage (115), la bague de montage de couplage (115) pouvant être connectée de façon fixe en rotation à l'extrémité (117) du couplage de milieu sous pression rotatif (6) pour former une connexion de fluide entre des tubes de l'ensemble de tubes (12) et les connexions de milieu sous pression (7) du couplage de milieu sous pression rotatif (6).

8. Dispositif selon la revendication 7, **caractérisé en ce que** la bague de montage de couplage (115) et l'extrémité (117) du couplage de milieu sous pression rotatif (6) sont conçues de telle sorte qu'elles ne puissent être connectées entre elles que dans une seule position.

9. Dispositif pour confectionner un pneu, le dispositif comprenant :
une unité d'entraînement (1),
un arbre de tambour (2) pouvant être entraîné par l'unité d'entraînement (1),
un tambour de confection agencé autour de l'arbre de tambour (2), le tambour de confection comprenant une première moitié de tambour de confection (3) et une deuxième moitié de tambour de confection (4),
une unité de milieu sous pression (5) pour pressuriser un milieu sous pression, et
un couplage de milieu sous pression (6) rotatif autour de l'arbre de tambour (2), le couplage de milieu sous pression étant muni de connexions de milieu sous pression (7),
dans lequel chaque moitié de tambour de confection (3, 4) est munie d'un certain nombre connexions de milieu sous pression (8, 9) et d'éléments actionnés par le milieu sous pression (10, 11), dans lequel les connexions de milieu sous pression (8) de la première moitié de tambour de confection (3) sont connectées aux connexions de milieu sous pression (7) du couplage de milieu sous pression rotatif (6) au moyen d'un premier ensemble de tubes (12), dans lequel dans l'arbre de tambour (2) ont été agencées des conduites de milieu sous pression (13), lesquelles sont connectées d'un côté au couplage de milieu sous pression rotatif (6) et sont connectées de l'autre côté aux connexions de milieu sous pression (9) de la deuxième moitié de tambour de confection (4) au moyen d'un deuxième ensemble de tubes (14),
**caractérisé en ce que** les connexions de milieu sous pression (7) du couplage de milieu sous pression rotatif (6) ont été placées sensiblement au niveau ou à proximité d'une extrémité (71) du couplage de milieu sous pression rotatif (6), ladite extrémité faisant face à la première moitié de tambour de confection (3), et **en ce que** les connexions de milieu sous pression (8) de la première moitié de tambour de confection (3) ont été placée sensiblement au niveau ou à proximité d'une extrémité distale (81) de la première moitié de tambour de confection (3), dans lequel au moins le premier ensemble de tubes (212) est connecté au niveau d'une première extrémité à une bague de montage de moitié de tambour de confection (215A) et est connecté au niveau d'une deuxième extrémité à une bague de montage de couplage (215B), dans lequel la bague de montage de moitié de tambour de confection (215A) peut être connectée de façon fixe en rotation à l'extrémité distale (81) pour former une connexion de fluide entre des tubes du premier ensemble de tubes (212) et les connexions de milieu sous pression (8) de la première moitié de tambour de confection (3), et dans lequel la bague de montage de couplage (215B) peut être connectée de façon fixe en rotation à l'extrémité (71) du couplage de milieu sous pression rotatif (6) pour former une connexion de fluide entre des tubes de l'ensemble de tubes (212) et les connexions de milieu sous pression (7) du couplage de milieu sous pression rotatif (6).

10. Dispositif selon la revendication 9, **caractérisé en ce que** la bague de montage de moitié de tambour de confection (215A) et l'extrémité distale (81) de la première moitié de tambour de confection (3) sont conçues de telle sorte qu'elles ne puissent être connectées entre elles que dans une seule position et/ou dans lequel la bague de montage de couplage (215B) et l'extrémité (71) du couplage de milieu sous pression rotatif (6) sont conçues de telle sorte qu'elles ne puissent être connectées entre elles que dans une seule position.
